# EUROPÄISCHE PATENTSCHRIFT

(11) **EP 0 512 381 B1**
(45) Veröffentlichungstag und Bekanntmachung des Hinweises auf die Patenterteilung: **22.06.1994**
(21) Anmeldenummer: 92107262.5
(22) Anmeldetag: 29.04.1992
(51) Int. Cl.: E05B 65/12

(54) **Befestigungsvorrichtung für ein herausnehmbares Dachteil eines Personenkraftwagens**
Locking device for removable roof for motor vehicle
Dispositif de verrouillage pour toit amovible de véhicule à moteur

(30) Priorität: 06.05.1991 DE 9105583 U
(43) Veröffentlichungstag der Anmeldung: 11.11.1992
(73) Patentinhaber: Wilhelm Karmann GmbH, D-49084 Osnabrück (DE)
(72) Erfinder: Brüggemann, Heinrich, W-4506 Hagen a.T.W. (DE)
(74) Vertreter: Busse & Busse Patentanwälte

(56) Entgegenhaltungen:
- GB-A- 1 514 733
- US-A- 4 786 092
- IBM, TECHNICAL DISCLOSURE Bd. 12, Nr. 3, August 1969, LOCKART,VOKALI: 'coverlatch'

## Beschreibung

Die Erfindung bezieht sich auf eine Befestigungsvorrichtung für ein herausnehmbares Dachteil eines Personenkraftwagens nach dem Oberbegriff des Anspruchs 1.

Derartige Befestigungsvorrichtungen (US-A-4 786 092) für herausnehmbare Dachteile an Personenkraftwagen weisen einen Ver- und Entriegelungsmechanismus in der Form auf, daß am Dachteil mit der Fahrzeugkarosserie verbindbare Steck- und Rastelemente vorgesehen sind, die über einen als Drehhebel ausgebildeten Betätigungsgriff ver- bzw. entriegelbar sind. Der Drehhebel ist dabei einenends über einen gemeinsamen Drehzapfen mit den beiden Rasthalterungen verbunden und weist keine Sicherung gegen unbeabsichtigtes Öffnen auf. Bei einer anderen Vorrichtung gemäß GB-A-1 514 733 ist ein im Bereich der Fahrzeuglängsachse nahe der Frontscheibe befindlicher Betätigungsgriff in Form eines geschlossenen Bügels vorgesehen, der um einen quer zur Fahrzeuglängsachse angeordneten Drehzapfen klappbar ist und mit dem eine an einem Verbindungsbauteil befindliche Klinke verschwenkbar ist.

Der Erfindung liegt die Aufgabe zugrunde, eine Befestigungsvorrichtung für ein herausnehmbares Dachteil eines Personenkraftwgens zu schaffen, deren Betätigungsorgane bei eingerastetem Dachteil als Insassen-Haltegriff einsetzbar und dabei gegen unbeabsichtigtes Entriegeln zuverlässig gesichert ist.

Die Erfindung löst diese Aufgabe durch eine Befestigungsvorrichtung mit den Merkmalen des Kennzeichnenden Teils des Anspruchs 1. Hinsichtlich wesentlicher weiterer Ausgestaltungsmerkmale wird auf die Ansprüche 2 bis 14 verwiesen.

Die Erfindung schafft eine Befestigungsvorrichtung, deren Rasthalterung, die von der Riegelstange und dem mit dieser antriebsseitig verbundenen Betätigungsgriff gebildet ist, derart in die Dachinnenverkleidung des Dachteiles integrierbar ist, daß der durch das Schwenkgelenkteil und das Verbindungsstück beweglich gehaltene Betätigungsgriff nach dem Einrasten der Riegelstange in das Karosseriedach durch entsprechendes Schwenken unter die Dachinnenebene hinreichend weit eingelassen ist und damit die Kopffreiheit nicht beeinträchtigt. Nach dem Herausschwenken dieses als bügelförmiger Handgriff ausgebildeten Betätigungsgriffes aus seiner Sicherungsstellung unter der Dachinnenebene kann der Betätigungsgriff vom Fahrzeuginsassen als Haltegriff verwendet werden, wobei dieser dabei nicht vom Verbindungsstück lösbar ist, da ein dazu zu betätigender Auslöseknopf ergonomisch so am Griff angeordnet ist, daß seine Zugänglichkeit erst bei geöffneter Fahrzeugtür gegeben und damit die Sicherheit für einen zuverlässigen Verschluß in der Verriegelungsstellung gewährleistet ist.

Hinsichtlich weiterer Vorteile und Einzelheiten wird auf die nachfolgende Beschreibung und die Zeichnung verwiesen, in der ein Ausführungsbeispiel des Gegenstandes der Erfindung schematisch näher veranschaulicht ist. In der Zeichnung zeigen:
- Fig. 1: einen perspektivischen Teilschnitt des vorderen Seitenbereiches eines Personenkraftwagens mit der prinzipiellen Anordnung einer erfindungsgemäßen Befestigungsvorrichtung für ein herausnehmbares Dachteil,
- Fig. 2: eine vergrößerte Prinzipdarstellung der Lage eines Betätigungsgriffes der Befestigungsvorrichtung im Dachteil,
- Fig. 3: eine Darstellung des Betätigungsgriffes gemäß Fig. 2 in Haltestellung,
- Fig. 4: eine Darstellung des Betätigungsgriffes gemäß Fig. 2 und 3 mit dessen Verbindung zu einer Riegelstange in Entriegelungsstellung, und
- Fig. 5: eine Explosivdarstellung des Betätigungsgriffes.

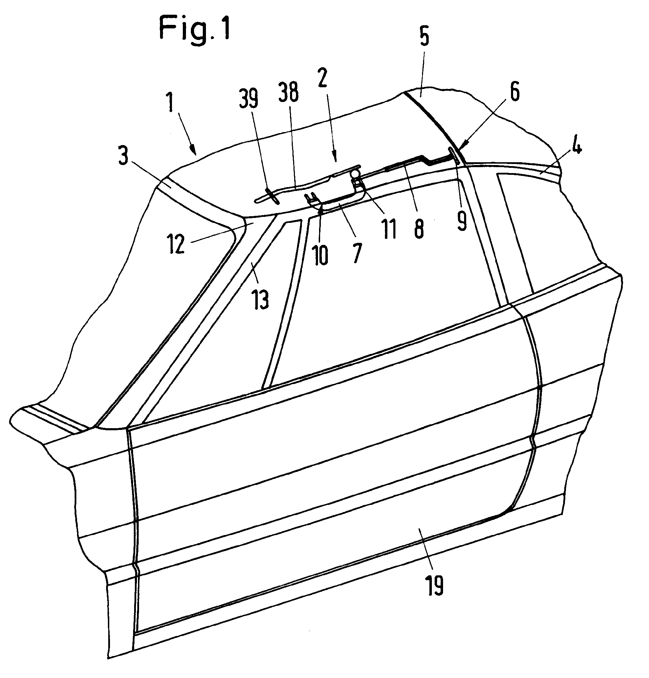

In Fig. 1 ist ein insgesamt mit 1 bezeichnetes herausnehmbares Dachteil mit einer zugehörigen Befestigungsvorrichtung 2 in einer prinzipiellen Anordnung dargestellt, wobei das Dachteil 1 zwischen Frontbereich 3 und Heckbereich 4 eines festen Karosseriedaches 5 mittels einer Rasthalterung 6 festgelegt ist. Die Befestigungsvorrichtung 2 weist dabei einen als bügelförmiger Handgriff ausgebildeten Betätigungsgriff 7 und eine verschiebbare Riegelstange 8 auf, die die Befestigungsvorrichtung 2 und das Dachteil 1 insgesamt am Karosseriedach 5 in einer Formausnehmung 9 abstützt.

Der Betätigungsgriff 7 ist am Dachteil 1 über ein Verbindungsstück 10 schwenkbeweglich und über ein Schwenkgelenkteil 11 drehbeweglich gehalten. Die Befestigungsvorrichtung 2 befindet sich mit ihrer Rasthalterung 6 jeweils auf beiden Seiten (nicht dargestellt) des Dachteils 1 und ist zum seitlichen Karosseriebereich 12 bzw. zum Türrahmen 13 derart beabstandet, daß der Betätigungsgriff 7 in einer Haltestellung, z.B. während der Fahrt sowie beim Ein- und Aussteigen, oder einer Entriegelungsstellung beim Abnehmen des Dachteiles 1 bequem erreichbar ist.

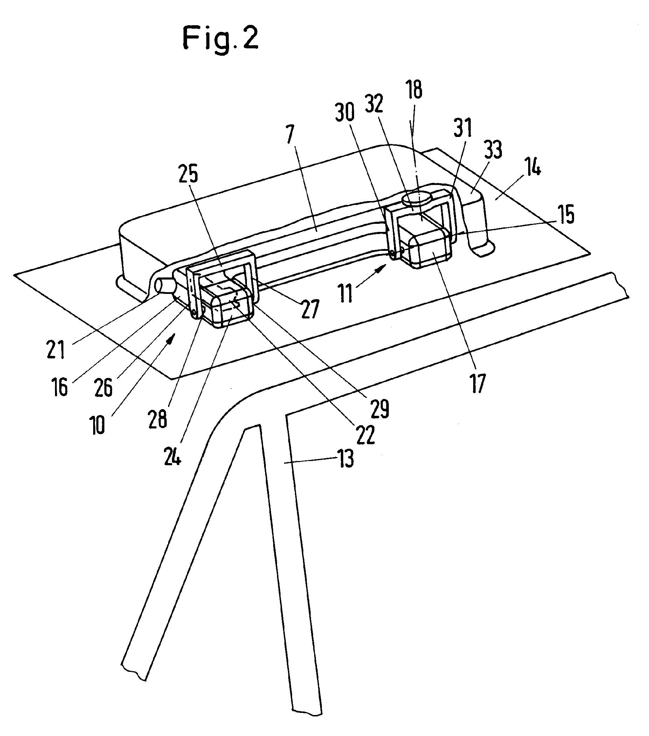

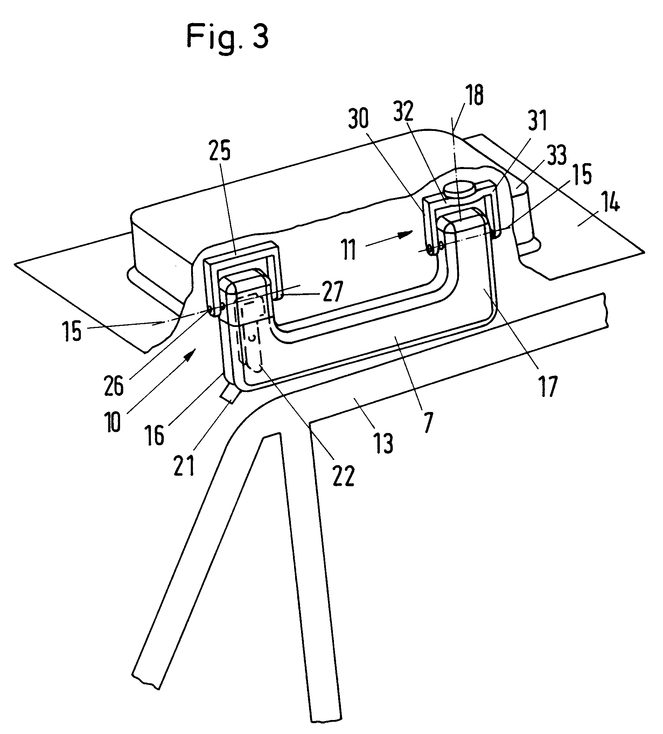

In Fig. 2 ist in einer vergrößerten Einzeldarstellung der Betätigungsgriff 7 in einer im Dachteil 1 (Fig. 1) unter eine Dachinnenebene 14 versenkten Sicherungsstellung veranschaulicht. Aus dieser Sicherungsstellung ist der Betätigungsgriff 7 um eine zur Längsachse (nicht dargestellt) des Fahrzeuges parallele Halteachse 15 in eine Haltestellung (Fig. 3) schwenkbar, wobei der Betätigungsgriff 7 mit seinem vorderen Ende 16 in dem am Dachteil 1 gehaltenen Verbindungsstück 10 festgelegt bleibt und ein hinteres Ende 17 in dem drehbaren Schwenkgelenkteil 11 gehalten ist.

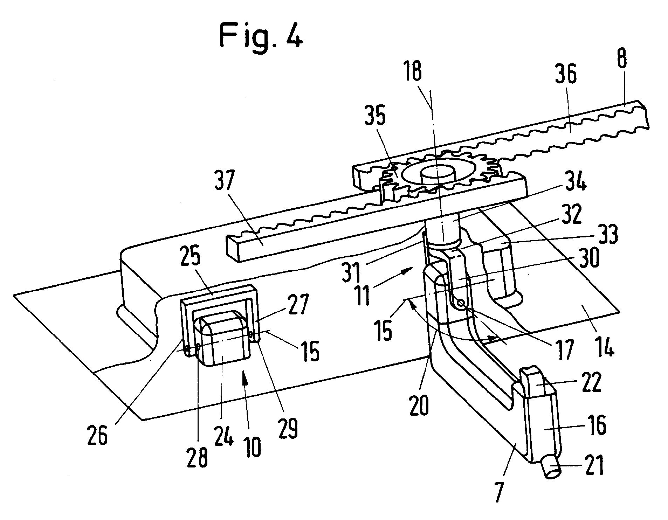

In Fig. 4 ist der Betätigungsgriff 7 um eine zur Dachinnenebene 14 vertikale Hauptachse 18 verschwenkt dargestellt, wozu eine Fahrzeugtür 19 (Fig. 1) bzw. der zugehörige Türrahmen 13 ebenfalls so weit verschwenkt ist, daß der Betätigungsgriff 7 im Schwenkgelenkteil 11 um einen Drehwinkel 20 ohne hinderlichen Anschlag um z.B. 90° in die Entriegelungsstellung drehbar ist.

In der Ausführungsform gemäß Fig. 2 bis 4 weist der Betätigungsgriff 7 im Bereich des vorderen, vom Verbindungsstück 10 lösbaren Endes 16 einen Auslöseknopf 21 auf, der mit einem Rasthaken 22 in das am Dachteil 1 gehaltene Verbindungsstück 10 eingreift. Dieser Auslöseknopf 21 ist zweckmäßig unter Schrägstellung im vorderen Ende 16 des Betätigungsgriffes 7 angeordnet, so daß die Zugänglichkeit sowohl in der Sicherungsstellung (Fig. 2) als auch in der Haltestellung (Fig. 3) zumindest eingeschränkt ist, um ein unbeabsichtigtes Entriegeln zu vermeiden.

Der Auslöseknopf 21 ist in der Haltestellung im wesentlichen zum Frontbereich 3 des Fahrzeuges ausgerichtet und damit für den Daumen einer in den als bügelförmiger Handgriff ausgebildeten Betätigungsgriff 7 eingelegten Hand ebenso nicht erreichbar wie z.B. für spielende Kinder aus dem hinteren Fahrzeugbereich.

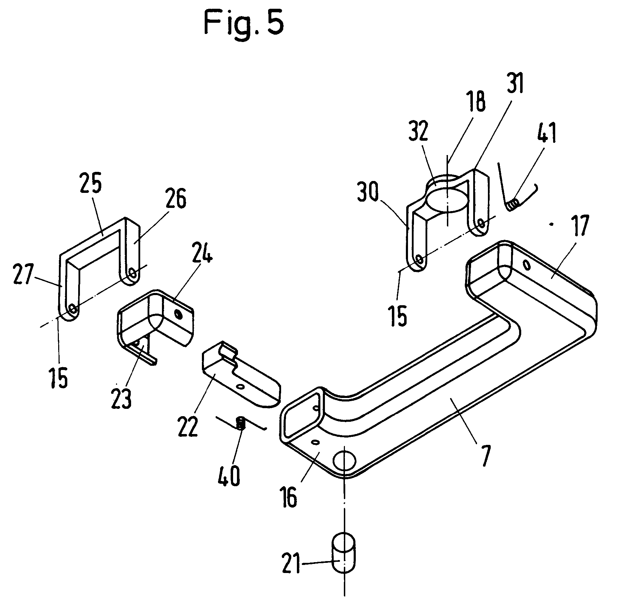

Der mit dem Auslöseknopf 21 betätigbare Rasthaken 22 ist mit dem von einem Koppelglied 24 mit einer Formausnehmung 23 und einem Haltebock 25 (Fig. 5) gebildeten Verbindungsstück 10 verbunden; durch die oben beschriebene Anordnung des Auslöseknopfes 21 läßt sich der Rasthaken 22 nur bei geöffneter Fahrzeugtür 19 für eine neben dem Fahrzeug stehende Person entriegeln, womit eine zuverlässige Sicherung gegen unbeabsichtigtes Entriegeln gegeben ist.

Der Haltebock 25 weist in zweckmäßiger Ausführung zwei Halteschenkel 26,27 auf, die mittels Stiften 28,29 (Fig. 2) das Koppelglied 24 in der Halteachse 15 schwenkbeweglich abstützen.

Der in Fig. 4 vom Verbindungsstück 10 getrennte und um den Drehwinkel 20 um die Hauptachse 18 verdrehte Betätigungsgriff 7 ist im Bereich des hinteren Endes 17 im Schwenkgelenkteil 11 zwischen zwei Schenkeln 30,31 einer Haltegabel 32 über Axialstifte (nicht dargestellt) abgestützt. Diese Haltegabel 32 ist im Bereich eines nach oben abgesenkten Teiles 33 der Dachinnenebene 14 mit einem Drehzapfenteil 34 verbunden, das in der Hauptachse 18 eine Verbindung zur Riegelstange 8 (Fig. 1) aufweist.

In zweckmäßiger Ausführung ist endseitig am Drehzapfenteil 34 ein Ritzel 35 angeordnet, das mit der zumindest bereichsweise als eine Führungszahnstange 36 ausgebildeten Riegelstange 8 verzahnt ist. Die Bewegung des Betätigungsgriffes 7 um den Drehwinkel 20 bewirkt damit eine Drehung des Ritzels 35 um die Hauptachse 18 und eine dazu tangentiale Verschiebung der Riegelstange 8 in der Fahrzeuglängsachse derart, daß das Ende der Riegelstange 8 im Bereich der Formausnehmung 9 als Rasthalterung 6 je nach Drehrichtung eine Verriegelungsstellung bzw. eine Entriegelungsstellung für das herausnehmbare Dachteil 1 zum Karosseriedach 5 einnimmt.

In einer weiteren Ausführungform kann zu der Führungszahnstange 36 eine parallele Führungszahnstange 37 angeordnet sein, die als ein Widerlager beweglich am Dachteil 1 abgestützt ist und im vorderen Bereich eine in einer Halterung 39 aufgenommene Riegelverlängerung 38 (Fig. 1) aufweist.

Die Führungszahnstangen 36,37 können damit vorteilhaft als mit dem Ritzel 35 synchron in entgegengesetzte Richtungen bewegliche Riegelglieder ausgebildet sein, deren als Riegelstangen ausgebildete Enden jeweils in die hintere Formausnehmung 9 im Heckbereich 4 bzw. in eine vordere Formausnehmung (nicht dargestellt) im Frontbereich 3 in das feste Karosseriedach 5 eingreifen.

Die Darstellung gemäß Fig. 4 veranschaulicht die Stellung des Betätigungsgriffes 7 für die Entriegelung der Führungszahnstangen 36,37 beim Herausnehmen bzw. Wiedereinsetzen des Dachteils 1. Beim Zurückschwenken des Betätigungsgriffes 7 zum Verbindungsstück 10 hin erfolgt die parallele Verschiebung der Führungszahnstangen 36,37 und damit gegebenenfalls die Verriegelung des Dachteiles 1. Dazu greift der Rasthaken 22 in das Kupplungsglied 24 ein, und über im Bereich des Auslöseknopfes 21 und der Haltegabel 32 befindliche Rückstellfedern 39,40 (Fig. 5) wird der Betätigungsgriff 7 in die Sicherungsstellung gemäß Fig. 2 gedrückt.

## Patentansprüche

1. Befestigungsvorrichtung für ein herausnehmbares Dachteil (1) eines Personenkraftwagens, mit zumindest zwei vom Innenraum betätigbaren, in Formausnehmungen (9) des festen Karosseriedaches (5) eingreifenden Rasthalterungen (6), die jeweils eine aus einer in das Karosseriedach (5) eingreifenden Verriegelungsstellung in eine Entriegelungsstellung verschiebbare Riegelstange (8) und einen mit diesen einenends antriebsseitig über einen gemeinsamen Drehzapfen (34) verbundenen Betätigungsgriff (7) aufweisen, **dadurch gekennzeichnet,** daß der Betätigungsgriff (7) als ein bügelförmiger Handgriff ausgebildet und anderenends lösbar in einem am Dachteil (1) festgelegten schwenkbeweglichen Verbindungsstück (10) gehalten ist und daß der Betätigungsgriff (7) aus einer im Dachteil (1) unter eine Dachinnenebene (14) versenkten Sicherungsstellung um eine zur Längsachse des Fahrzeuges parallele Halteachse (15) in eine Haltestellung schwenkbar ist, aus der der Betätigungsgriff (7) nach dem Lösen aus dem Verbindungsstück (10) um eine zur Dachinnenebene (14) vertikale Hauptachse (18) eines mit dem Drehzapfen (34) verbundenen Schwenkgelenkteils (11) in eine Entriegelungsstellung drehbar ist.

2. Befestigungsvorrichtung nach Anspruch 1, dadurch gekennzeichnet, daß die Halteachse (15) des Betätigungsgriffes (7) in einem dessen Drehwinkel (20) bei geschlossener Fahrzeugtür (19) begrenzenden Abstand zum seitlichen Karosseriebereich (12) angeordnet ist.

3. Befestigungsvorrichtung nach Anspruch 1 oder 2, dadurch gekennzeichnet, daß der Betätigungsgriff (7) im Bereich seines vorderen, lösbaren Endes (16) einen Auslöseknopf (21) aufweist, der mit einem Rasthaken (22) in das am Dachteil (1) gehaltene Verbindungsstück (10) eingreift.

4. Befestigungsvorrichtung nach Anspruch 3, dadurch gekennzeichnet, daß der Auslöseknopf (21) unter Schrägstellung im vorderen Ende (16) des Betätigungsgriffes (7) angeordnet und in Haltestellung des Betätigungsgriffes (7) im wesentlichen zum Frontbereich (3) des Fahrzeuges ausgerichtet ist.

5. Befestigungsvorrichtung nach Anspruch 3 oder 4, dadurch gekennzeichnet, daß der Rasthaken (22) in eine Formausnehmung (23) des ein Koppelglied (24) aufweisenden Verbindungsstückes (10) eingreift.

6. Befestigungsvorrichtung nach einem der Ansprüche 3 bis 5, dadurch gekennzeichnet, daß das Koppelglied (24) zwischen zwei Halteschenkeln (26,27) eines am Dachteil (1) gehaltenen Haltebockes (25) schwenkbeweglich in der Halteachse (15) abgestützt ist.

7. Befestigungsvorrichtung nach Anspruch 6, dadurch gekennzeichnet, daß das Koppelglied (24) und der Haltebock (25) mittels Stiften (28,29) verbunden sind und gemeinsam das Verbindungsstück (10) bilden.

8. Befestigungsvorrichtung nach einem der Ansprüche 1 bis 7, dadurch gekennzeichnet, daß der Betätigungsgriff (7) im Bereich des Schwenkgelenkteiles (11) zwischen zwei Schenkeln (30,31) einer drehbar gelagerten Haltegabel (32) mit Axialstiften schwenkbar abgestützt ist.

9. Befestigungsvorrichtung nach einem der Ansprüche 1 bis 8, dadurch gekennzeichnet, daß die Haltegabel (32) über den endseitig ein Ritzel (35) aufweisenden Drehzapfen (34) mit der zumindest bereichsweise als eine Führungszahnstange (36) ausgebildeten Riegelstange (8) verzahnt ist.

10. Befestigungsvorrichtung nach Anspruch 9, dadurch gekennzeichnet, daß im Bereich des Ritzels (35) eine parallele Führungszahnstange (37) angeordnet ist.

11. Befestigungsvorrichtung nach Anspruch 9 oder 10, dadurch gekennzeichnet, daß die parallele Führungszahnstange (37) als bewegliches Widerlager mit dem Dachteil (1) verbunden ist.

12. Befestigungsvorrichtung nach einem der Ansprüche 9 bis 11, dadurch gekennzeichnet, daß die parallele Führungszahnstange (37) in ihrem vorderen Bereich eine Riegelverlängerung (38) aufweist, die in einer Halterung (39) beweglich abgestützt ist.

13. Befestigungsvorrichtung nach einem der Ansprüche 9 bis 12, dadurch gekennzeichnet, daß beide Führungszahnstangen (36,37) als mit dem Ritzel (35) synchron in entgegengesetzte Richtungen bewegliche Riegelglieder ausgebildet sind.

14. Befestigungsvorrichtung nach einem der Ansprüche 1 bis 13, dadurch gekennzeichnet, daß der Betätigungsgriff (7) im Bereich des Auslöseknopfes (21) und der Haltegabel (32) jeweils eine Rückstellfeder (40,41) aufweist.

## Claims

1. A device for fixing a removable roof part (1) of a motor car, with, adapted to be actuated from the inside and engaging shaped recesses (9) in the fixed roof (5), at least two catch holders (6), each of which comprises a locking rod (8) adapted for displacement out of a locked position engaging the fixed roof (5) and into a released position and an actuating handle (7) which has one end connected to it via a common pivot journal (34) at the drive end, characterised in that the actuating handle (7) is constructed as a stirrup-shaped handle and is supported at the other end in separable manner in a connecting member (20) adapted for pivoting movement but fixed on the roof part (1) and in that the actuating handle (7) can be pivoted out of a safety position in the roof part (1), in which it is recessed below an interior plane (14) of the roof and about a supporting spindle (15) parallel with the longitudinal axis of the vehicle and into a holding position, after detachment from the connecting member (10), the actuating handle (7) can be rotated into a released position about a main axis (18) vertical in relation to the interior plane (14) of the roof, said main axis (18) being that of a pivot joint part (11) connected to the pivot journal (34).

2. A fixing device according to claim 1, characterised in that the supporting spindle of the actuating handle (7) is disposed at a distance from the lateral portion (12) of the body work which defines its angle of rotation (20) when the vehicle door (19) is closed.

3. A fixing device according to claim 1 or 2, characterised in that the actuating handle (7) has in the region of its front separable end (16) a release knob (21) having a catch hook (22) which engages the connecting member (10) supported on the roof part (1).

4. A fixing device according to claim 3, characterised in that the release knob (21) is disposed in an inclined attitude at the front end (16) of the actuating handle (7) and, in the holding position of the actuating handle (7), is orientated substantially towards the front part (3) of the vehicle.

5. A fixing device according to claim 3 or 4, characterised in that the catch hook (22) engages a shaped recess (23) in the connecting member (10) which has a coupling member (24).

6. A fixing device according to any one of claims 3 to 5 characterised in that the coupling member (24) is braced between two retaining arms (26, 27) of a supporting bracket (25) secured to the roof part (1) and is able to perform a pivoting movement in the holding axis (15).

7. A fixing device according to claim 6, characterised in that the coupling member (24) and the supporting bracket (25) are connected by pins (28, 29) and jointly form the connecting member (10).

8. A fixing device according to any one of claims 1 to 7 characterised in that the actuating handle (7) is in the region of the pivot joint part (11) pivotably braced by axial pins between two arms (30, 31) of a rotatably mounted and bifurcated bracket (32).

9. A fixing device according to any one of claims 1 to 8 characterised in that the bifurcated bracket (32) is, via the pivot journal (34) which has a pinion (35) at one end, interlocked with the locking bar (8) portions at least of which are constructed as a guiding rack (36).

10. A fixing device according to claim 9, characterised in that a parallel guiding rack (37) is disposed in the region of the pinion (35).

11. A fixing device according to claim 9 or 10, characterised in that the parallel guiding rack (37) is connected to the roof part (1) as a movable abutment.

12. A fixing device according to any one of claims 9 to 11 characterised in that the parallel guiding rack (37) has in its front portion a locking extension (38) which is movably supported in a holder (39).

13. A fixing device according to any one of claims 9 to 12 characterised in that both guiding racks (36, 37) are constructed as locking members adapted for movement in opposite directions and in synchronism with the pinion (35).

14. A fixing device according to any one of claims 1 to 13 characterised in that the actuating handle (7) has restoring springs (40, 41) in the region of the release knob (21) and the bifurcated bracket (32) respectively.

## Revendications

1. Dispositif de verrouillage pour une partie (1) de toit amovible d'une voiture particulière à moteur avec au moins deux fixations à crans (6) venant en prise dans des évidements (9) de la toiture fixe de la carrosserie (5), fixations (6) qui présentent respectivement une tige de verrouillage (8) pouvant coulisser, à partir d'une positon de verrouillage qui vient en prise dans la toiture de la carrosserie (5), dans une position de déverrouillage et une poignée de manoeuvre (7) reliée à celle-ci à une extrémité du côté de l'entraînement au moyen d'un tourillon (34) commun, caractérisé en ce que la poignée de manoeuvre (7) est constituée comme une poignée en forme d'étrier et est fixée à l'autre extrémité de façon démontable dans une pièce de liaison (10) qui peut pivoter, fixée sur la partie (1) du toit et en ce que la poignée de manoeuvre (7) peut pivoter à partir d'une position de sécurité en ayant basculé sous un plan intérieur (14) de la toiture autour d'un axe de maintien (15) parallèle à l'axe longitudinal du véhicule, dans une positon de maintien, à partir de laquelle on peut faire tourner la poignée de manoeuvre (7), après le déserrage à partir de la pièce de liaison (10), autour d'un axe principal (18), vertical par rapport au plan intérieur (14) de la toiture, d'une pièce (11) d'articulation reliée au tourillon (34), dans une position de déverrouillage.

2. Dispositif de verrouillage selon la revendication 1, caractérisé en ce que l'axe de maintien (15) de la poignée de manoeuvre (7) est disposé à une distance par rapport à la zone latérale de la carrosserie (12) limitant son angle de rotation (20) quand la porte du véhicule (19) est fermée.

3. Dispositif de verrouillage selon la revendication 1 ou 2, caractérisé en ce que la poignée de manoeuvre (7) présente dans la zone de son extrémité (16) antérieur, libérable un bouton de libération (21) qui vient en prise par un crochet à crans (22) dans la pièce de liaison (10) maintenue sur la pièce de toit (1).

4. Dispositif de verrouillage selon la revendication 3, caractérisé en ce que le bouton de libération (21) est disposé en position oblique à l'extrémité avant (16) de la poignée de manoeuvre (7) et quand la poignée de manoeuvre (7) est en position de maintien le bouton de libération (21) est orienté essentiellement en direction de la zone frontale (3) du véhicule.

5. Dispositif de verrouillage selon la revendication 3 ou 4, caractérisé en ce que le crochet à crans (22) vient en prise dans un évidement (23) de la pièce de liaison (10) présentant un organe d'accouplement (24).

6. Dispositif de verrouillage selon l'une des revendications 3 à 5, caractérisé en ce qu'on appuie l'organe d'accouplement (24) entre deux branches de fixation (26, 27) d'un bloc d'arrêt (25) maintenu sur la pièces (1) de toit en pivotant, dans l'axe de maintien (15).

7. Dispositif de verrouillage selon la revendication 6, caractérisé en ce que l'organe d'accouplement (24) et le bloc d'arrêt (25) sont reliés au moyen de deux axes (28, 29) et forment en commun la pièce de liaison (10).

8. Dispositif de verrouillage selon l'une des revendications 1 à 7, caractérisé en ce qu'on appuie la poignée de manoeuvre (7) de façon qu'elle puisse pivoter dans la zone de la pièce d'articulation (11) entre deux branches (30, 31) d'une fourche d'arrêt (32) montée de façon à pouvoir tourner, avec des tiges axiales.

9. Dispositif de verrouillage selon l'une des revendications 1 à 8, caractérisé en ce que la fourche d'arrêt (32) engrène avec la crémaillère (34) présentant du côté terminal un pignon (35) avec la tige de verrouillage (8) constituée au moins dans une zone sous la forme d'une crémaillère de guidage (36).

10. Dispositif de verrouillage selon la revendication 9 ou 10, caractérisé en ce que la crémaillère parallèle de guidage (37) est reliée comme contre appui mobile à la partie (1) de toit.

11. Dispositif de verrouillage selon la revendication 9, caractérisé en ce que dans la zone du pignon (35) est placée une crémaillère parallèle de guidage (37).

12. Dispositif de verrouillage selon l'une des revendications 9 à 11, caractérisé en ce que la crémaillère parallèle de guidage (37) présente dans sa zone antérieure un prolongement de verrouillage (38), qui s'appuie de façon mobile dans un support (39).

13. Dispositif de verrouillage selon l'une des revendications 9 à 12, caractérisé en ce que les deux crémaillères de guidage (36, 37) sont constituées comme des organes de verrouillage mobiles de façon synchrone avec le pignon (35) en sens opposés.

14. Dispositif de fixation selon l'une des revendications 1 à 13, caractérisé en ce que la poignée de manoeuvre (7) présente dans la zone du bouton de libération (21) et de la fourche d'arrêt (32) respectivement un ressort de rappel (40, 41).
